# EUROPEAN PATENT APPLICATION

(11) **EP 1 533 698 A2**
(43) Date of publication of application: **25.05.2005**
(21) Application number: 04027330.2
(22) Date of filing: 17.11.2004
(51) Int. Cl.: G06F 9/445, B60R 25/00

(54) **Portable terminal device for communicating with vehicle mounted equipment**

(30) Priority: 18.11.2003 JP 2003387743
(71) Applicant: JATCO Ltd, Fuji-shi, Shizuoka (JP)
(72) Inventor: Tanaka, Hiroyasu, Fuji-shi, Shizuoka (JP); Iida, Toshiji, Fuji-shi, Shizuoka (JP); Kinoshita, Miki, Fuji-shi, Shizuoka (JP); Eguchi, Takashi, Fuji-shi, Shizuoka (JP)
(74) Representative: Hoefer & Partner

(57) **Abstract**

A portable terminal device (100) comprising a microcomputer (2) and a memory card (5) is mounted on a vehicle for collecting operation information of the vehicle. The microcomputer (2) has a flash read only memory (23) storing a firmware of the terminal device (100), and a memory card slot (6). The memory card (5) comprises a firmware layer (5a) storing a second firmware and a data storage layer (5c) for recording the operating information. The microcomputer (2) replaces the firmware in the flash read only memory (23) with the second firmware, thereby rendering the firmware replacement easy.

## Description

### FIELD OF THE INVENTION

This invention relates to a portable terminal device for communicating with a vehicle mounted equipment.

### BACKGROUND OF THE INVENTION

JP H10-55464-A issued in 1998 by the Japan Patent Office discloses a vehicle information collection device comprising a microcomputer for recording data output from a vehicle mounted equipment and representing an operating condition of a vehicle in an external recording medium.

Automotive Handbook 4th Edition by BOSCH (ISBN 0-8376-0333-1)" discloses in pages 800-802, a serial bus system called "Controller Area Network (CAN)". CAN enables exchange of various signals between a vehicle mounted equipment and, for example, a terminal device temporarily disposed in a vehicle cabin. Herein, the vehicle mounted equipment includes a microcomputer for controlling vehicle running and the portable terminal device includes the above described vehicle information collection device.

### SUMMARY OF THE INVENTION

In the device disclosed in JP H10-55464-A, in order to change the type of recorded data or recording conditions of the terminal device it is necessary to rewrite a firmware or a program stored in the microcomputer of the terminal device. When those items are written in a read only memory (ROM) of the microcomputer, it is necessary to replace the ROM. When these items are written in an erasable programmable read only memory (EPROM), it is necessary to connect the device to an EPROM rewriting device to rewrite the content of the EPROM. That is, even if the device is formed in the form of a portable terminal device, each time the information collection conditions are changed, either the replacement of the ROM or rewriting of the EPROM contents by the EPROM rewriting device is required. Therefore, it is difficult to fully utilize the function of the CAN that has a high versatility in view of signal transmitting.

It is therefore an object of this invention to provide a portable terminal device having improved applicability to different conditions of use.

In order to achieve the above object, this invention provides a portable terminal device for communicating with a vehicle mounted equipment, comprising a microcomputer and a memory card. The microcomputer comprises a connector for exchanging signals with the vehicle mounted equipment, an erasable programmable only memory which stores firmware of the microcomputer, and a memory card slot in which the memory card is fitted so as to communicate with the microcomputer. The memory card comprises a firmware layer which stores a second firmware and a data storage layer which stores the signals output from the microcomputer through the memory card slot. The microcomputer is programmed to replace the firmware stored in the erasable programmable read only memory with the second firmware stored in the firmware layer of the memory card in response to an input of a predetermined command.

The details as well as other features and advantages of this invention are set forth in the remainder of the specification and are shown in the accompanying drawings.

### BRIEF DESCRIPTION OF THE DRAWINGS

FIG. 1 is a diagram showing a connection between a vehicle mounted computer and a portable terminal device disposed in a drink holder in a vehicle cabin, according to this invention.

FIGS. 2A and 2B are perspective views of the portable terminal=.

FIG. 3 is a perspective view of main body of the portable terminal device.

FIG. 4 is a plan view of the portable terminal device as viewed from above.

FIG. 5 is a plan view of the portable terminal device as viewed from below.

FIG. 6 is a cross-sectional view of the portable terminal device taken along the line VI-VI of FIG. 4.

FIG. 7 is a cross-sectional view of the portable terminal device taken along the line VII-VII of FIG. 4.

FIG. 8 is a schematic diagram of the portable terminal device and a memory card according to this invention.

### DESCRIPTION OF THE PREFERRED EMBODIMENTS

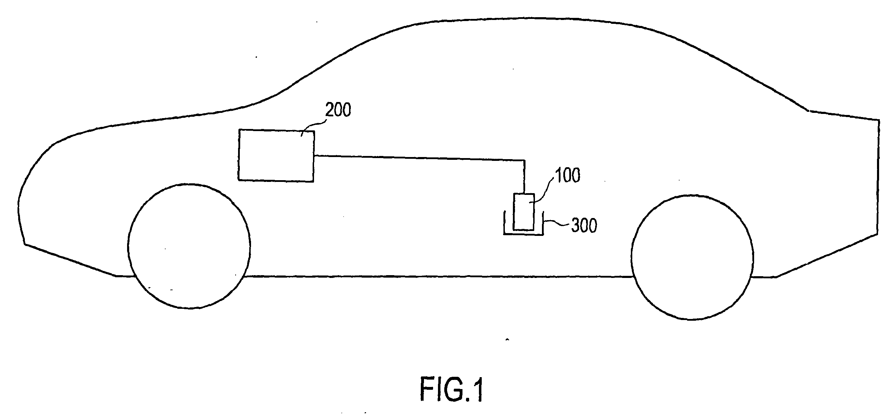

Referring to FIG. 1 of the drawings, a portable terminal device 100 according to this invention is connected with a computer 200 mounted on a vehicle for controlling, for example, vehicle drive device. The vehicle is provided with a serial bus system called "Controller Area Network (CAN) that transmits various kind of signals between the vehicle mounted computer 200 and the portable terminal device 100. The portable terminal device 100 is formed in a cylindrical shape and is disposed in a drink holder 300 in a cabin compartment of the vehicle.

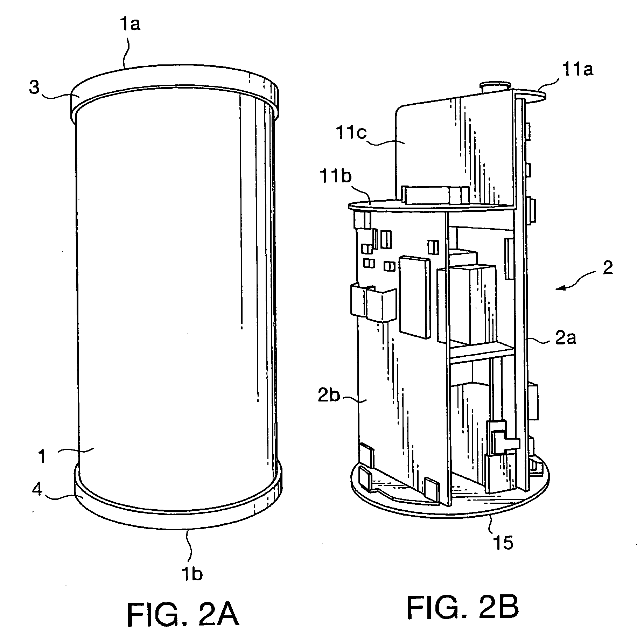

Referring to FIGS. 2A and 2B, the terminal device 100 comprises a cylindrical case 1 and a main body 2 disposed inside the cylindrical case 1. The main body is constituted by a microcomputer. A ring cap 3 is attached to an upper end 1a of the cylindrical case 1, and a bottom lid 4 is attached to a lower end 1b of the cylindrical case 1.

An outer diameter of the cylindrical case 1 is about 67 mm, which is substantially the same as the outer diameter of normal 350-milliliter beverage cans so as to be suitable for fitting in the drink holder in the cabin compartment. The cylindrical case 1 is made of an aluminum thin plate. Therefore, the cylindrical case 1 is light, and is held easily.

The ring cap 3 is made of rubber, and is attached to an outer circumference of an upper end 1a of the cylindrical case 1.

The bottom lid 4 is made of a resin, and closes the lower end 1b of the cylindrical case 1.

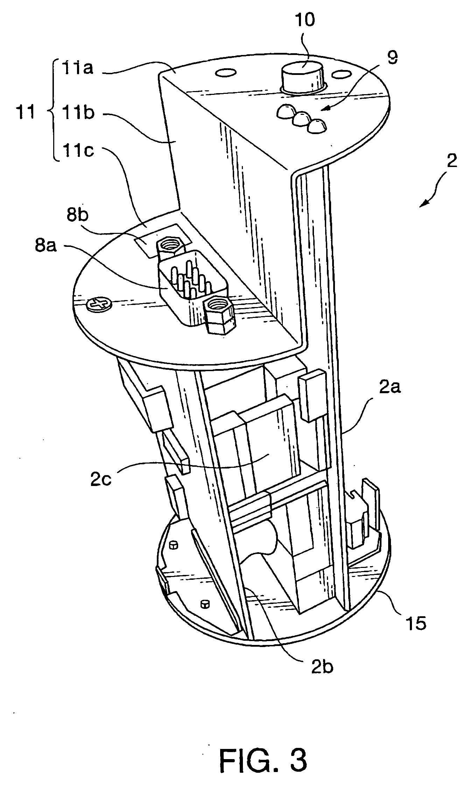

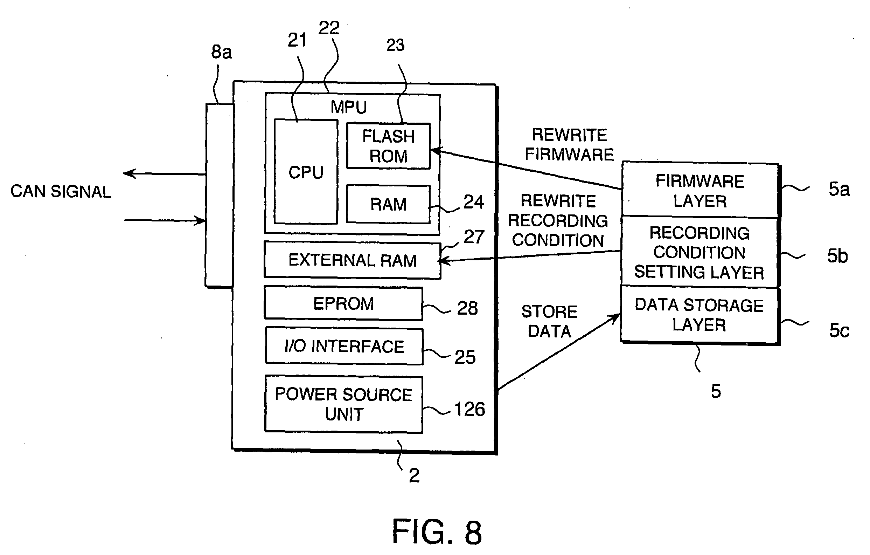

Referring to FIG.8, the microcomputer constituting the main body 2 comprises a micro processing unit (MPU) 22, an external random access memory (external RAM) 27, an erasable programmable read only memory (EPROM) 28, an input/output interface (I/O interface) 25, and a power source unit 126. The MPU 22 comprises a central processing unit (CPU) 21, a flash read only memory (flash ROM) 23, and a random access memory (RAM) 24. Those components 21-25. 27,28 and 126 are separately provided on a main board 2a and a sub-board 2b which are shown in FIG. 3.

Referring to FIG. 3, the main board 2a and the sub-board 2b are provided in parallel with each other, and vertically upright on a circular lower panel 15. The vertical length of the main board 2a is longer than the vertical length of the sub-board 2b. The vertical length of the main board 2a and the vertical length of the sub-board 2b depend on the layout of electronic components of the main body 2. As the main board 2a and the sub-board 2b get shorter, the position of the center of gravity of the terminal device 100 becomes lower. The terminal device 100 having the center of gravity at the low position is preferable in view of stability when it is placed in the drink holder. An upper panel 11 is fixed to an upper end of the main board 2a and an upper end of the sub-board 2b. The main board 2a and the sub-board 2b are interconnected by a connector board 2c to form an electric circuit and a signal circuit.

The upper panel 11 comprises an upper semicircular surface 11a fixed to the main board 2a, and a lower semicircular surface 11b fixed to the sub-board 2b. The upper end of the main board 2a is higher than the upper end of the sub-board 2b, so there is a step between the upper semicircular surface 11a and the lower semicircular surface 11b. Then, the upper semicircular surface 11a and the lower semicircular surface 11b are connected by a vertical coupling surface 11c.

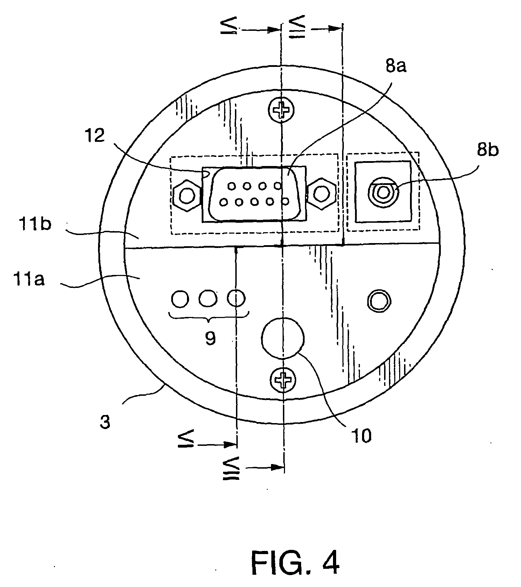

Referring to FIG. 4, LEDs 9 indicating the operating condition of the terminal device 100 are arranged on the upper semicircular surface 11a of the upper panel 11. The number of LEDs 9 is three, and the LEDs 9 have different colors. The LEDs 9 reports the operating condition to a driver or a user of the terminal device 100. Preferably, the relationship between lighting patterns of the LEDs 9 and the operating condition of the terminal device 100 is marked on the outer circumferential surface of the upper semicircular surface 11a or the cylindrical case 1.

A push switch 10 is provided on the upper semicircular surface 11a. The push switch 10 is operated by the driver or the user of the device. When the push switch 10 is turned on, the microcomputer starts recording signal information inputted from the CAN of the vehicle in a memory card 5 which is described later. The push switch 10 is also used for rewriting data in the EPROM 23.

The terminal device 100 has a connector 8a on the lower semicircular surface 11b of the upper panel 11 for connection to a CAN cable.

Further, the terminal device 100 has a terminal 8b on the lower semicircular surface 11b for obtaining electricity from a cigar lighter socket of the vehicle.

The length of the cylindrical case 1 is determined such that the LEDs 9, the push switch 10, and a connector 7 of the CAN cable connected to the connector 8a do not protrude above the cylindrical case 1.

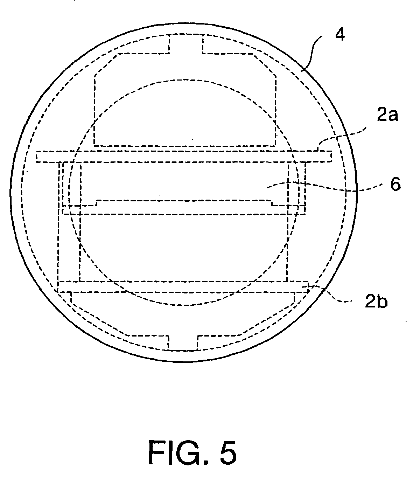

Referring to FIG. 5, the main body 2 comprises a memory card slot 6 for inserting the memory card 5 between the main board 2a and the sub-board 2b. The memory card slot 6 has a connector for connection to the memory card 5.

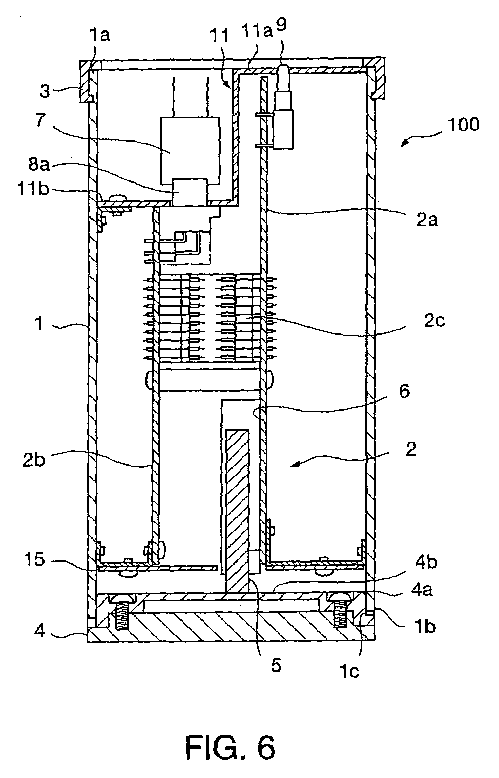

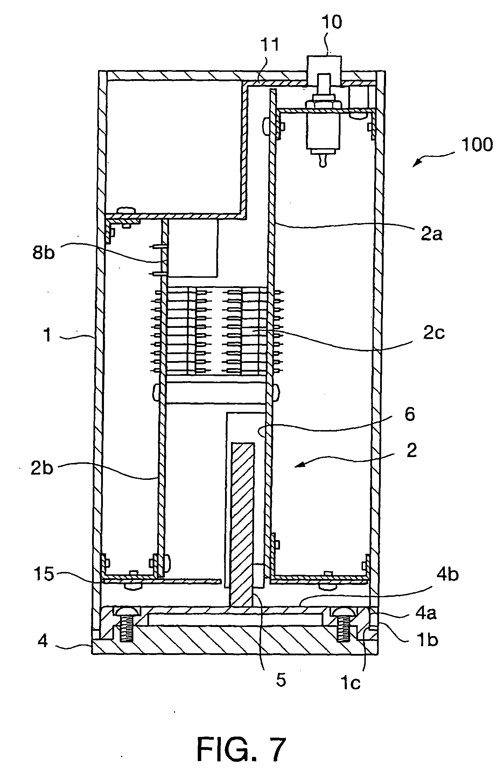

Referring to FIGS. 6 and 7, the upper panel 11 and the lower panel 15 are fixed to the cylindrical case 1, respectively.

A female screw 1c is formed in an internal circumferential surface at the lower end of the cylindrical case 1. The bottom lid 4 has a male screw 4a screwed into the female screw 1c. The male screw 4a has a chamfered tip end.

Rubber material is attached to a surface 4b of the bottom lid 4, which contacts the memory card 5. After the memory card 5 is inserted into the memory card slot 6, the bottom lid 4 is screwed into the cylindrical case 1. The bottom lid 4 screwed into the cylindrical case 1 keeps the memory card 5 inside the memory card slot 6 by the elastic force of the rubber member. Therefore, it is possible to prevent disconnection of the memory card 5 from the connector in the memory card slot 6 due to vibrations while the vehicle is running. The memory card slot 6 is hermetically closed by the bottom lid 4 to prevent the entry of dust into the memory card slot 6.

Next, referring to FIG. 8, the structure of the memory card 5 will be described.

The memory card 5 is a portable recording medium used as an external recording medium for the microcomputer. The memory card 5 includes, but not limited to, a CompactFlash®, a MemoryStick® or a SmartMedia®.

The memory card 5 comprises a firmware layer 5a storing a firmware of the microcomputer of the main body 2 a recording condition setting layer 5b storing a recording condition setting file in order to select signals for recording from among input signals to the connector 8a, and a data storage layer 5c storing data.

In normal condition, when the push switch 10 is turned on, the microcomputer of the main body 2 selectively records signals inputted to the connector 8a as data in the memory card 5 in the slot 6 in accordance with the instructions from the firmware stored in the flash ROM 23 and the recording condition setting file stored in the external RAM 27. In accordance with the firmware stored in the ROM 22, the CPU 21 controls the flash ROM 23, RAM 24, I/O interface 25 and the memory slot 26 in order to accomplish the above operation. Further, when the push switch 10 is turned off, the microcomputer stops recording of the data.

Recording of the data can be started when an ignition switch of the vehicle is turned on, or an accessory switch is turned on, or a specific trigger signal is inputted from the CAN without the ON/OFF operation of the push switch 10. When recording of the data is carried out in response to the specific trigger signal inputted from the CAN, using a loop memory, it is possible to record data of a certain period before and after the start of data recording.

The operation of the terminal device 100 is stopped by turning off a switch used for starting up the terminal device 100. If the operation of the terminal device 100 is start up by the trigger signal from the CAN, operation of the terminal device 100 is also stopped by a stop signal from the CAN. It is needless to say that the stop operation of the terminal device 100 does not affect the data recorded in the memory card 5.

The microcomputer of the main body 2 has a counter function, and is capable of recording in the memory card 5 the lapsed time since the start-up of the operation.

The firmware stored in the memory card 5 and the recording condition setting file are used as follows.

When the type of the vehicle or target information to be collected changes, it is necessary to rewrite the firmware stored in the flash ROM 23 and the recording condition setting file stored in the external RAM 27. With respect to the recording condition setting file stored in the external RAM 27, it is always erased when the terminal device 100 is switched off and, when the terminal device 100 is switched on, the recording condition setting file in the recording condition setting layer 5b of the memory card 5 is newly loaded into the external RAM 27. So the recording condition setting file is automatically renewed every time when the terminal device 100 is switched on.

Unlike the recording condition setting file, renewal of the firmware in the flash ROM 23 requires a specific operation. In order to rewrite the firmware stored in the flash ROM 23, a memory card 5 storing the applicable firmware in its firmware layer 5a is inserted into the slot 6 of the terminal device 100 while the push switch 10 is pushed. When this operation is carried out, the terminal device 100 replaces the firmware in the flash ROM 23 with the firmware stored in the firmware layer 5a of the memory card 5.

The above firmware rewriting operation is achieved by defining the process in a specific block in the flash ROM 23 that is first referred when the terminal device 100 is switched on. It should be noted that this specific block is different from the block for storing the firmware. The firmware newly installed in the flash ROM 23 is not erased until another rewriting operation is performed.

When the terminal device 100 is restarted after rewriting the firmware, the terminal device 100 records the designated information in the data storage layer 5c of the memory card 5 according to the instructions by the new firmware stored in the flash ROM 23. It should be noted that, even if the terminal device 100 is repeatedly turned on and off, unlike the recording condition setting file in the external RAM 27, the firmware in the flash ROM 23 is not rewritten without the above described specific operation of the push switch 10.

As described above, the information inputted from the CAN is recorded always depending on the firmware in the flash ROM 23. The firmware in the memory card 5 is not used except the case in which the above described operation of the push switch 10 is performed.

In the normal information recording operation, the terminal device 100 simply writes information in the memory card 5, and does not read data from the memory card 5. Therefore, the memory card 5 is not accessed excessively.

As described above, in the terminal device 100 according to this invention, when the firmware needs to be changed, simply by inserting a suitable memory card 5 to the slot 6 while the push button 10 is pushed, it is possible to rewrite the firmware. Therefore, it is possible to rewrite the firmware easily while the terminal device 100 is mounted in the vehicle without replacing the flash ROM 23 of the microcomputer or connecting the terminal device 100 to a special firmware rewriting device.

The contents of Tokugan 2003-387743, with a filing date of November 18, 2003 in Japan, are hereby incorporated by reference.

Although the invention has been described above by reference to certain embodiments of the invention, the invention is not limited to the embodiments described above. Modifications and variations of the embodiments described above will occur to those skilled in the art, within the scope of the claims.

For example, any other types of erasable programmable read only memories (EPROM) or rewritable non-volatile memories can be used instead of the flash ROM 23 in the terminal device 100.

In the above embodiment, the recording condition setting file is loaded from the memory card 5 into the external RAM 27 every time when the terminal device 100 is switched on. However, it is also possible to configure the terminal device 100 to be able to rewrite the recording condition setting file stored in the external RAM 27 by a specific command that may be inputted by a specific operation of the push switch 10.

Further, it is also possible to store the recording condition setting file into the flash ROM 23 together with the firmware and to provide a special command to rewrite the recording condition setting file in the flash ROM 23.

While the embodiment of this invention has been described in conjunction with the terminal device 100 for recording the input signals from the CAN, this invention is applicable to any portable terminal device that communicates with a vehicle mounted equipment via any kind of signal circuit.

The embodiments of this invention in which an exclusive property or privilege is claimed are defined as follows:

## Claims

1. A portable terminal device (100) for communicating with a vehicle mounted equipment (200), comprising:
a microcomputer (2) which comprises a connector (8a) for exchanging signals with the vehicle mounted equipment (200), an erasable programmable read only memory (23) which stores firmware of the microcomputer (2), and a memory card slot (6); and
a memory card (5) which can be fitted into the memory card slot (6) so as to communicate with the microcomputer (2), the memory card (5) having a firmware layer (5a) which stores a second firmware and a data storage layer (5c) which stores the signals output from the microcomputer (2) through the memory card slot (6);
wherein the microcomputer (2) is programmed to replace the firmware stored in the erasable programmable read only memory (23) with the second firmware stored in the firmware layer (5a) of the memory card (5) in response to an input of a predetermined command.

2. The portable terminal device (100) as defined in Claim 1, wherein the microprocessor (2) further comprises a random access memory (27) to store a recording condition setting file, the memory card (5) further comprises a recording condition setting layer (5b) storing the recording condition setting file, and the microcomputer (2) is further programmed to load the recording condition setting file stored in the recording condition setting layer (5b) into the random access memory (27) in response to an input of a predetermined command, and record data from the vehicle mounted equipment (200) according to the recording condition setting file in the random access memory (27).

3. The portable terminal device (100) as defined in Claim 2, wherein the microcomputer (2) is further programmed to load the recording condition setting file stored in the recording condition setting layer (5b) into the random access memory (27) every time when the device is turned on.

4. The portable terminal device (100) as defined in Claim 1, wherein the input of the predetermined command is realized by a predetermined operation of the terminal device (100).

5. The portable terminal device (100) as defined in any one of Claim 1 through Claim 4, wherein the microcomputer (2) is further programmed to activate the second firmware by restarting the terminal device (100) after replacing the firmware stored in the erasable programmable read only memory (23) with the second firmware.

6. The portable terminal device (100) as defined in any one of Claim 1 through Claim 5, wherein the connector (8a) is compliant with Controller Area Network.

7. The portable terminal device (100) as defined in any one of Claim 1 through Claim 6, wherein the terminal device (100) further comprises a cylindrical case (1) which houses the microcomputer (2), an upper panel (11) which closes an end of the case (1) and a lower lid (4) which closes a lower end of the case (1), and the connector (8a) is disposed on the upper panel (11).

8. The portable terminal device (100) as defined in Claim 7, wherein: the upper panel (11) comprises an upper semicircular panel (11a), a lower semicircular panel (11b), and a vertical coupling surface (11c) which connects the upper semicircular panel (11a) and the lower semicircular panel (11c), and the connector (8a) is disposed on the lower semicircular panel (11b).

9. The portable terminal device (100) as defined in Claim 8, wherein the connector (8a) is configured to engage with a connector (7) fixed to a signal cable, and a height of the vertical coupling surface (11c) is set to a value with which the connector (7) fixed to the signal cable, in an engaged state with the connector (8a) disposed on the lower semicircular panel (11b), does not protrude from the case (1).

10. The portable terminal device (100) as defined in Claim 8 or Claim 9, wherein the microcomputer (2) comprises two vertical boards (2a, 2b) fitted in the case (1) in parallel with each other, one of the boards (2a, 2b) being fixed to the upper semicircular panel (11a) while the other of the boards (2a, 2b) being fixed to the lower semicircular panel (11b).

11. The portable terminal device (100) as defined in Claim 10, wherein the memory card slot (6) is formed between the two boards (2a, 2b).

12. The portable terminal device (100) as defined in Claim 11, wherein: the memory card slot (6) has an opening oriented downwardly; and the lower lid (4), in a state closing the lower end of the case (1), applies an upward elastic force to the memory card (5) engaged with the memory card slot (6) so as to secure the engagement therebetween.

13. The portable terminal device (100) as defined in any one of Claim 8 through Claim 12, wherein the terminal device (100) further comprises an indicator (9) which is disposed on the upper semicircular panel (11a) and indicates an operation state of the terminal device (100).

14. The portable terminal device (100) as defined in any one of Claim 8 through Claim 13, wherein the terminal device (100) further comprises a switch (10) disposed on the upper semicircular panel (11a), the switch (10),when turned on, causing the memory card (5) to start recording of the signals output from the microcomputer (2) via the memory card slot (6).

15. The portable terminal device (100) as defined in Claim 14, wherein the input of the predetermined command is realized by inserting the memory card (5) into the memory card slot (6) while continuing turn-on operation of the switch (10).

16. The portable terminal device (100) as defined in Claim 14 or Claim 15, wherein a positional relationship between the upper semicircular panel (11a) and the upper end of the case (1) is set so as not to cause the switch (10) to protrude upward from an upper end of the case (1).

17. The portable terminal device (100) as defined in any one of Claim 8 through Claim 16, wherein the vehicle comprises a drink holder (300) and the case (1) has a diameter which enables the case (1) to be fitted in the drink holder (300).

18. The portable terminal device (100) as defined in Claim 1, wherein the erasable programmable read only memory (23) comprises a flash read only memory.
